Europäisches Patentamt

European Patent Office

Office européen des brevets

(11) Veröffentlichungsnummer : **0 041 660**
**B1**

(12) # EUROPÄISCHE PATENTSCHRIFT

(45) Veröffentlichungstag der Patentschrift :
04.07.84

(51) Int. Cl.³ : **G 02 B 27/17, H 04 N 1/22**

(21) Anmeldenummer : **81104111.0**

(22) Anmeldetag : **29.05.81**

(54) **Lese- und Schreibvorrichtung mit einer optischen Abtastvorrichtung.**

(30) Priorität : **06.06.80 US 157147**

(43) Veröffentlichungstag der Anmeldung :
**16.12.81 Patentblatt 81/50**

(45) Bekanntmachung des Hinweises auf die Patenterteilung : **04.07.84 Patentblatt 84/27**

(84) Benannte Vertragsstaaten :
**CH DE FR GB IT LI NL SE**

(56) Entgegenhaltungen :
**DE-A- 2 306 185**
**DE-A- 2 825 550**
**GB-A- 2 053 505**

(73) Patentinhaber : **AMERICAN HOECHST CORPORA-TION**
**Route 202-206 North**
**Somerville, N.J. 08876 (US)**

(72) Erfinder : **Seeley, Douglas A.**
**63 Church Street**
**High Bridge New Jersey 08829 (US)**

(74) Vertreter : **Zounek, Nikolai, Dipl.-Ing. et al**
**c/o KALLE Niederlassung der Hoechst AG Patentabteilung Postfach 3540**
**Rheingaustrasse 190 D-6200 Wiesbaden 1 (DE)**

**Beschreibung**

Die Erfindung betrifft eine Lese- und Schreibvorrichtung mit einer optischen Abtastvorrichtung, durch die der Lese- und Schreibstrahl kollinear hindurchgeführt sind und die eine Dachspiegelanordnung und eine, um eine Drehachse drehbare Abtastscheibe mit zumindest einer darauf nicht senkrecht zu der Drehachse angeordneten, ebenen Spiegelfläche aufweist, wobei die Dachspiegelanordnung aus einem ersten ebenen Spiegel und einem zweiten ebenen Spiegel besteht, die in Relation zueinander und zu einer die Abtastscheibe abstützenden und deren Drehachsenrichtung bestimmenden Einrichtung fest stehen.

Bei dem optischen Abtastsystem der Erfindung wird eine Linearabtastung durch einen wandernden Lichtfleck eines Laserlichtstrahls angewandt, um eine gerade Linie in einer Ebene einer Abtaststation abzutasten. Die Erfindung findet vor allem Anwendung auf dem Gebiet der Lese- und Schreibsysteme mit Laserstrahlen, wie sie zum Lesen von Vorlagen auf einem Positionstisch durch einen Laserlesestrahl und direkte Übertragung der gelesenen Informationen an einen Laserschreibstrahl angewandt werden, um gleichzeitig eine fotoempfindliche Oberfläche eines Aufzeichnungsmaterials zum Herstellen einer Druckplatte zu belichten.

Auf dem Gebiet der Druckplattentechnologie werden in steigendem Ausmaß elektronische Methoden zum Aufzeichnen, Speichern und/oder Erzeugen von Information durch Computer, Kathodenstrahlröhren, Faksimile-Einrichtungen u. dgl. Geräte zur Anwendung gebracht.

Aus der DE-A-28 25 550 ist eine optische Abtastvorrichtung bekannt, die eine drehbare pyramidenförmige Abtastscheibe mit reflektierenden Segmenten umfaßt, die derart angeordnet sind, daß sie einen Laserstrahl in eine und aus einer zwei Spiegel umfassenden Dachspiegelanordnung ablenken, die der Abtastscheibe zugeordnet ist. Durch die Drehung der Abtastscheibe werden vertikale und horizontale Winkel- und Längsablenkkomponenten im Strahl hervorgerufen. Die vertikale Winkelablenkkomponente wird durch Umkehr an der Dachspiegelanordnung eliminiert, während die horizontale Winkelablenkkomponente durch die zweite Reflexion an der Abtastscheibe verdoppelt wird, so daß der Ausgangsstrahl in vertikaler Richtung stabil und frei von Ablenkungen ist, während der Strahl in horizontaler Richtung zu beiden Seiten durch die Summe der horizontalen Winkelablenkkomponenten, die durch die Abtastscheibe eingeführt werden, abgelenkt wird. Die Abtastvorrichtung liefert eine Abtastung durch einen wandernden Lichtfleck eines Laserstrahls in einer Belichtungsvorrichtung für eine fotoempfindliche Platte, wobei diese Vorrichtung mit einem überlagerten Laserlese- und -schreibstrahl arbeitet, die verschiedene Frequenzen besitzen und gleichzeitig abtasten, ohne daß eine chromatische Aberration auftritt und die nachfolgend aufgetrennt werden, um eine Vorlage zu lesen und eine fotoempfindliche Plattenoberfläche zu belichten, um eine Druckplatte herzustellen.

Die Abtastvorrichtung umfaßt die Dachspiegelanordnung, bestehend aus einem ersten und zweiten Spiegel, die zueinander so angeordnet sind, daß sie eine reflektierende Doppelanordnung bilden, in die die Strahlen des Lese- und Schreiblasers durch die Abtastscheibe abgelenkt werden, die optisch mit der Dachspiegelanordnung gekoppelt ist. Die Abtastscheibe besitzt eine Anzahl von ebenen Segmentfacetten, die in Pyramidenform angeordnet sind und die sich um eine Drehachse durch den Strahlengang des Lese- und Schreiblaserstrahls aufeinanderfolgend hindurchbewegen, wodurch sie diese zusammengefaßten Strahlen ablenken.

Die Strahlen werden durch die Oberflächensegmente aufeinanderfolgend auf jede Spiegelfläche der Dachspiegelanordnung einmal reflektiert und die aus der Dachspiegelanordnung austretenden Laserstrahlen treffen für eine zweite Reflexion auf das gleiche Oberflächensegment auf, von dem die Laserstrahlen das erste Mal reflektiert wurden. Nach der zweiten Reflexion treten die Laserstrahlen durch eine Ausgangsöffnung der Abtastvorrichtung zwischen dem ersten und zweiten Spiegel der Dachspiegelanordnung aus.

Die Oberflächensegmente sind in bezug auf die Achse des Strahlenganges geneigt, so daß sie bei ihrer Drehung durch den Pfad der Abtaststrahlen eine horizontale Winkelablenkkomponente hervorrufen, welche die Strahlen gleichzeitig und fortschreitend von der einen Seite zu der anderen Seite über die Vorlage und die Plattenoberfläche hinwegführt, während nach der zweiten Reflexion keine vertikale Winkelablenkkomponente auftritt.

In dem beschriebenen System tastet der Laserlesestrahl die Vorlage auf einem Lesetisch oder einem Projektionstisch ab, um ein Signal zu erzeugen, das sich entsprechend den gemessenen Reflexionen von der Vorlage ändert. Das Signal steuert einen Modulator im Strahlengang des Laserschreibstrahls, wodurch dessen Ausgangsleistung entsprechend gesteuert wird. Der Laserschreib- und Lesestrahl sind entlang eines gemeinsamen Laserstrahlengangs überlagert und werden der Abtastvorrichtung zugeführt. Die Abtastvorrichtung lenkt die Laserstrahlen seitwärts ab, d. h. zeilenweise in eine waagerechte Richtung um eine bestimmte Winkelablenkkomponente, wobei jedoch keine Ablenkung der Laserstrahlen nach oben oder unten, d. h. keine vertikale Winkelablenkkomponente auftritt. Nach dem Austritt aus der Abtastvorrichtung durchlaufen die Strahlen ein für die Bildfeldabflachung vorgesehenes Objektiv und werden durch geeignete optische Bauelemente voneinander getrennt, um dem zugehörigen Lese- und Belichtungstisch zugeführt zu werden. Die Abtastscheibe hat die Gestalt einer aus einer Kreisscheibe ausgeschnittenen dreiecksförmigen, regelmäßigen Pyramide, deren Seitenflächen mehrere ebene, reflektierende Oberflächensegmente bilden. Die Abtastscheibe ist drehbar um eine durch den Scheitel der pyramidenförmigen Scheibe verlaufende, symmetrische Achse gelagert, so daß beim Umlauf nacheinander jedes Oberflächensegment in den Weg der zusammengefaßten Laserstrahlen gebracht wird und diese durch Reflexion um einen dem halben Pyramidenwinkel entsprechenden Neigungswinkel abgelenkt werden, wobei dieser Neigungswinkel bei dem ebenen Segment bewirkt, daß sich dessen Winkel in Einfalls-Ausfalls-Richtung zu der Abtastvorrichtung an einer Reflexionsfläche ändert. Bei dem Durchgang jedes Oberflächensegments durch den Strahlengang ruft die sich ändernde Winkelausrichtung waagerechte und senkrechte Winkelablenkkomponenten in den Laserstrahlen hervor. Die horizontalen Winkelkomponenten werden bei der zweiten, ausgangsseitigen Reflexion an dem Oberflächensegment der Abtastscheibe verdoppelt, während die senkrechten Abtastkomponenten durch Umkehr an der Dachspiegelanordnung eliminiert werden. Mit anderen Worten gilt, daß beim Durchgang jedes Oberflächensegments durch den Strahlengang dieses in bezug auf die Drehachse einen Neigungswinkel einnimmt, der gleich ist dem halben Scheitelwinkel der zugeordneten Pyramide, so daß die einzelnen Oberflächensegmente für die einfallenden Laserstrahlen jeweils einen Reflexionswinkel vorgeben, der sich von Seite zu Seite entsprechend dem Neigungswinkel verändert. Der Reflexionswinkel weist einen Maximalwert auf, wenn die Senkrechte auf das Oberflächensegment mit den Laserstrahlen zusammenfällt. Der Neigungswinkel ergibt dann auf beiden Seiten ein Minimum in vertikaler Richtung. Gleichzeitig nimmt der eingeführte Horizontalwinkel an jeder Seite des Oberflächensegments ein Maximum an und ist in der Mitte gleich Null. Auf diese Weise werden die Laserstrahlen um den zweifachen Betrag der eingeführten horizontalen Winkelablenkkomponente abgelenkt und dann durch das Objektiv in den entsprechenden Bildebenen fokussiert.

Das in der DE-A-26 03 556 beschriebene Lese- und Schreibsystem zum automatischen Abtasten und Reproduzieren von Vorlagen auf fotoempfindlichen Oberflächen, beispielsweise zur Herstellung von Druckformen, erzeugt eine belichtete Druckplatte von einem Vorlagenumbruch auf einem Projektionstisch. Das Laserabtastsystem arbeitet mit einem Laserlesestrahl, der zu einem Lichtpunkt fokussiert ist und in einem vorgegebenen Muster, beispielsweise einer rasterförmigen Abtastung, den Projektionstisch abtastet. Das von dem Projektionstisch bzw. von der Vorlage reflektierte Licht wird in einem Sensorsystem aufgefangen, gelesen und zur Steuerung der Intensität eines zweiten Laserstrahls über einen Modulator genutzt. Der zweite Laserstrahl trifft auf eine fotoempfindliche Oberfläche eines Aufzeichnungsmaterials auf und tastet diese ab. Sowohl der Laserlesestrahl als auch der Laserschreibstrahl werden durch dieselbe Ablenkoptik hindurchgeführt und danach aufgetrennt, um auf den Projektionstisch bzw. auf die fotoempfindliche Oberfläche aufzutreffen und dort fokussiert zu werden. Auf diese Weise wird eine resultierende Belichtung der fotoempfindlichen Oberfläche in Übereinstimmung mit der Abtastung der Vorlage erhalten. Als Bestandteil der Abtastoptik wird ein bewegliches Spiegelgalvanometer verwendet. Der Laserlese- und -schreibstrahl fluchten miteinander und werden durch eine geeignete Strahlvereinigungsoptik zusammengeführt, so daß sie durch das Galvanometer gleichzeitig hindurchlaufen und danach durch eine geeignete Ablenkungsoptik in Richtung ihrer zugehörigen Ebenen aufgetrennt werden. Ein anderes geeignetes optisches System dieser Abtastvorrichtung verwendet eine polygonale Abtastscheibe mit einer Vielzahl von Oberflächensegmenten, die in bezug auf die Drehachse der Abtastscheibe nach außen geneigt sind. Die Oberflächensegmente dienen zum Ablenken der Lese-/Schreibstrahlen um einen Winkel und führen hierdurch eine Abtastung durch einen wandernden Lichtfleck herbei.

Die US-A-4,081,842 beschreibt eine Abänderung einer Laserlese-/schreibvorrichtung, die Bestandteil eines Faksimile-Systems ist. Bei diesem System werden zwei Laserlese- und -schreibvorrichtungen an getrennten Orten so koordiniert, daß sie ein Faksimile-Übertragungssystem bilden. In der Lesestation tastet eine optische Abtastvorrichtung die Eingabevorlage mit dem Abtastlichtfleck ab und das von dieser Vorlage reflektierte Licht erzeugt ein Videolesedatensignal, welches durch eine räumliche Abdeckblende festgestellt wird, um ein Übertragungsvideoreferenzsignal zu erhalten, welches die Videolesedaten vor der Übertragung abtastet. Im Empfänger wird eine zweite optische Abtastvorrichtung ähnlicher Bauweise durch ein Videoschreibdatensignal gesteuert. Das Videoschreibdatensignal tastet einen Abtastfleck des Laserbelichtungsstrahls ein und aus, um die auszugebende fotoempfindliche Kopieroberfläche im Empfänger zu belichten. Zusätzlich wird das Abtastlicht durch eine weitere räumliche Abtastblende abgetastet, um ein Empfängervideobezugssignal zu erhalten, das dazu benutzt wird, um ein Videoschreibsignal zu bilden. Die räumlichen Abdeckblenden im Übertrager und im Empfänger stehen zueinander in einer bekannten Beziehung oder sind gleich aufgebaut, so daß die Abtastung der Ausgabekopie im Empfänger mit der Abtastung der Eingabekopie bzw. der Vorlage im Übertrager räumlich synchronisiert werden kann. Jede der Abtastoptiken umfaßt ein durch einen Spiegel betätigtes Galvanometer zum Ablenken des einfallenden Laserstrahls vor und zurück um einen Horizontalwinkel.

Die aus der zuvor erwähnten DE-A-26 03 556 bekannte Vorrichtung weist eine für eine Bildfeldabflachung ausgebildete Linse auf, die bewirkt, daß die Laserstrahlen der Abtastvorrichtung in einer Ebene des Projektionstisches bzw. der fotoempfindlichen Oberfläche fokussiert werden und es werden daher derartige Vorrichtungen auch als Flachabtastvorrichtungen bezeichnet. Die Abtastoptiken, die eine polygonale Trommel verwenden, erfordern die Einhaltung sehr enger Toleranzen während der Herstellung, um beispielsweise die Neigung der Oberflächensegmente untereinander zu kontrollieren. Jeder Fehler in der Ausrichtung der Segmente zueinander zusammen mit Fehlern bei der Lagerung bzw. Stützung dieser polygonalen Trommeln u. dgl. trägt dazu bei, daß eine Winkel- oder Positionsfehlerkomponente senkrecht zu der Abtastlinie auftritt, die als Wobbeln oder Vertikalfehler bekannt ist. Des weiteren gilt, daß die polygonale Ausgestaltung der Ablenkscheibe in der Herstellung infolge der erforderlichen engen Toleranzenteuer ist und daß geeignete Vorkehrungen getroffen werden müssen, um Fehler in der Neigung der Segmente zueinander durch sogenannte « Dewobbler » zu eliminieren.

Bei der Resonanz- oder Schwinggalvanometer-Abtastvorrichtung nach der US-A-4,081,842 dreht sich der Galvanometerspiegel sinusförmig. Da die Ablenkgeschwindigkeit nicht linear ist, wird der geradlinige Mittelteil der Ablenkung in erster Linie verwendet. In diesem Fall ist es notwendig, in gegengesetzten Richtungen nach vorne und zurück abzulenken, um einen Wirkungsgrad von ungefähr 50 % Ablenkwirkung aufrechtzuerhalten. Eine derartige Ablenkung erfordert eine Kompensation des Nacheilens durch das Ablenken des Lesestrahls als Funktion der Systemzeitverzögerungen und der Ablenkgeschwindigkeit. Da eine Nacheilkompensation zum größten Teil von der Position des Strahls im Schreibmodulator abhängt, ergibt sich ein System, in dem die Nacheilung nur teilweise und mit zusätzlichen Kosten kompensiert werden kann. Wird eine Anzahl von derartigen Vorrichtungen in einem Faksimile-System für die Informationsübertragung eingesetzt, so wird die meiste Eicharbeit für jede Vorrichtung zur Normalisierung der Nacheilung verwandt, die in jeder Vorrichtung erzeugt wird. Ein Nacheilfehler oder jeder sonstige Fehler im Faksimile-Verfahren, wenn in beiden Richtungen abgetastet wird, resultiert bei der Aufzeichnung der links und rechts ausgegebenen Bilder in einer fehlenden Überlagerung, wodurch sich eine erhebliche Bildverschlechterung selbst bei kleinen Fehlern ergibt. Dementsprechend ist die Vor- und Rückwärtsabtastung in entgegengesetzter Richtung begrenzt. Hand in Hand mit der Forderung nach höheren Geschwindigkeiten, insbesondere bei Faksimile-Systemen, überschreiten die Abtastanforderungen die Möglichkeiten von Spiegelgalvanometer in bezug auf die physikalische Stabilität und Abstützung des Galvanometerspiegels, wenn dieser mit hohen Resonanzschwinggeschwindigkeiten betrieben wird, da sein innerer Aufbau der Vorwärts- und Rückwärtsbewegung bei steigendem Drehmoment nicht standhalten kann.

Andere bekannte Systeme, die eine gekrümmte Abtastung anwenden, in erster Linie zylindrische Abtastung, sind gleichfalls in ihrer Abtastwirksamkeit begrenzt. In einem derartigen System wird beispielsweise ein sogenannter « Spinner » in einer zylindrischen Anordnung für die Ablenkung verwendet, wobei bei jeder Drehung der Ablenkvorrichtung eine Abtastung erfolgt. Werden die Belichtungszeiten für ein Standardformat berechnet, so sind extrem hohe Rotationsgeschwindigkeiten erforderlich und Synchronisation in einem Faksimile-System ist schwierig durchzuführen. Des weiteren erfordern gekrümmte Feldsysteme, daß die Belichtungsfläche an eine gekrümmte Gestalt angepaßt wird, was oft mit der Herstellung von Druckplatten nicht verträglich ist.

Aufgabe der Erfindung ist es, eine optische Lese- und Schreibvorrichtung zu schaffen, die eine optische Abtastvorrichtung enthält, welche die Begrenzungen und Nachteile bekannter Vorrichtungen dieser Art vermeidet und eine Abtastung ermöglicht, bei der vertikale und horizontale Versetzungen eliminiert werden, die durch die Reflexion der koinzidenten Lese- und Schreibstrahlen in der optischen Abtastanordnung erzeugt werden, mit einer ebenen Bildfeldabtastung bei gleichzeitig guter Geschwindigkeitslinearität und Abtastwirksamkeit während des Abtastbetriebes in einer einzigen Richtung, bei welcher die Strahlen frei von vertikalen Wobbelfehlern aus der Vorrichtung austreten und welche die Strahlen in ihrer Gesamtheit reflektiert, um Aberrationsfehler zu vermeiden, die normalerweise durch unterschiedliche Frequenzen des Laserlese- und -schreibstrahls hervorgerufen werden.

Diese Aufgabe wird erfindungsgemäß durch eine Vorrichtung mit den Merkmalen des Anspruchs 1 gelöst.

Die optische Laserstrahl-Abtastvorrichtung ist eine Komponente einer Lese- und Schreibvorrichtung für eine Vorlage und die gleichzeitige Belichtung einer licht- bzw. fotoempfindlichen Oberfläche eines Druckmaterials mit dem Bild der Vorlage zur Herstellung einer Druckplatte. Die Abtastvorrichtung umfaßt eine Abtastscheibe mit zumindest einer darauf befestigten ebenen Spiegelfläche. Diese Spiegelfläche schließt einen vorgegebenen Neigungswinkel, der nicht senkrecht zu der Drehachse der Abtastscheibe steht, mit der Drehachse ein. Des weiteren sind ein Antrieb zum Drehen der Abtastscheibe um ihre Drehachse vorgesehen und eine Stützeinrichtung- für die Abtastscheibe in einer Stellung im gemeinsamen Strahlengang eines Laserlese- und -schreibstrahls zum Ablenken des kollinear geführten Lese- und Schreibstrahls in eine Dachspiegelanordnung und für den Empfang des von dieser Dachspiegelanordnung reflektierten kollinear geführten Lese- und Schreibstrahls, um eine gerade Linie in einer Ausgabeebene im Raum abzutasten. Diese Dachspiegelanordnung besteht aus einem ersten Spiegel mit einer ersten ebenen reflektierenden Oberfläche und einem zweiten Spiegel mit einer zweiten ebenen reflektierenden Oberfläche. Der erste und der zweite Spiegel stehen zueinander in fester Relation und sind gegenüber der Stützeinrichtung ortsfest. Der kollinear geführte Lese- und Schreibstrahl wird nach dem Eintritt in die und bis zu dem Austritt aus der Abtastvorrichtung 4n-fach an der Spiegelfläche der Abtastscheibe und 2n-fach zwischen dem ersten und zweiten Spiegel der Dachspiegelanordnung, mit n gleich einer ganzen Zahl, so reflektiert, daß die Reflexionen in der Reihenfolge Spiegelfläche-erster Spiegel-zweiter Spiegel, danach Spiegelfläche-zweiter Spiegel-Spiegelfläche und vor dem Austritt in der Reihenfolge zweiter Spiegel-erster Spiegel-Spiegelfläche erfolgen.

Die weitere Ausgestaltung der Erfindung ergibt sich aus den Merkmalen der übrigen Ansprüche.

Im folgenden wird die Erfindung anhand der Zeichnungen näher erläutert.

Es zeigen :

Figur 1 eine schematische perspektivische Ansicht einer optischen Laserstrahl-Abtastvorrichtung nach der Erfindung mit dem Strahlabtastmechanismus zum Lesen einer Vorlage auf einem Projektionstisch und zum Belichten einer fotoempfindlichen Platte auf einem Belichtungstisch ;

Figur 2 eine Teilseitenansicht im Schnitt der Abtastvorrichtung mit einer ebenen Abtastscheibe der Vorrichtung nach Fig. 1, längs der Linien 2-2 derselben ;

Figur 3 eine Vorderansicht einer weiteren Ausführungsform einer Abtastscheibe in Gestalt einer Pyramide mit Oberflächensegmenten, die anstelle der ebenen Abtastscheibe in der Vorrichtung nach den Figuren 1 und 2 verwendet wird ;

Figur 4 eine schematische perspektivische Ansicht des Strahlenganges der koinzidenten Strahlen durch die Abtastvorrichtung bei einem mittleren Winkel der Abtastscheibe innerhalb der Vorrichtung, wobei die koinzidenten Strahlen innerhalb der Abtastvorrichtung mehrfach reflektiert werden ;

Figuren 5 und 6 schematische Darstellungen zur Veranschaulichung des Prinzips, nach dem eine parallele Versetzung zwischen den koinzidenten Laserstrahlen eliminiert wird, wenn diese eine Dachspiegelanordnung und die Abtastscheibe der Abtastvorrichtung nach der Erfindung durchlaufen.

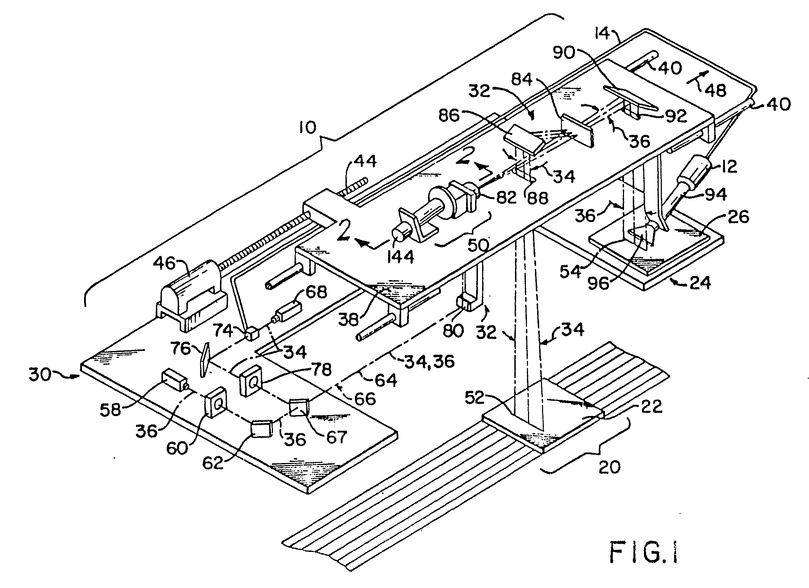

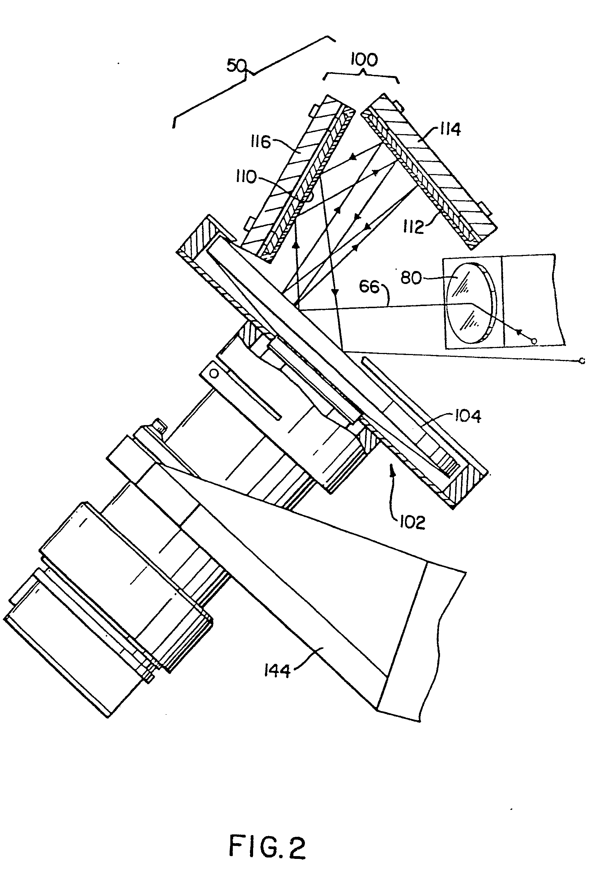

In den Figuren 1 und 2 ist ein Laserlese/schreibsystem dargestellt, das im wesentlichen aus einer Station 20 besteht, welche einen Belichtungstisch 22 aufnimmt und einer weiteren Station 24, die einen Lese- bzw. Projektionstisch 26 trägt. Auf dem Belichtungstisch 22 ist eine fotoempfindliche Platte aufgelegt, die durch die Vorrichtung, die nachstehend näher beschrieben wird, abgetastet und für eine nachfolgende Entwicklung zu einer Druckplatte belichtet wird. Die zu lesende Vorlagenkopie ist auf dem Projektionstisch 26 angeordnet. Eine Laserstation 30 ist vorgesehen, deren Ausgangsstrahl durch ein Abtastsystem 32 geleitet wird und durch dieses in einen Laserschreib- und Laserlesestrahl 34 bzw. 36 aufgespalten wird, welche die zugehörigen Tische abtasten. Das Abtastsystem 32 umfaßt einen Tisch 38, der von einem linearen Transportmechanismus mit parallelen Führungsschienen 40 gestützt ist, welche auf der Unterseite des Tisches befestigte Lager zum Bewegen in eine vorgegebene Richtung aufnehmen, angetrieben durch eine Führungsschraube 44 und einen Drehmotorantrieb 46, die auf einem nicht dargestellten geeigneten Rahmen der Vorrichtung angeordnet sind, so daß die Laserstation und die Tische zueinander im wesentlichen im Raum ortsfest angeordnet sind, während der Abtasttisch in Richtung des Pfeils 48 sich bewegt.

Der Tisch trägt ferner ein horizontales Abtast-Teilsystem 50 (Fig. 2), das entsprechend der vorliegenden Erfindung aufgebaut ist, und das die Laserstrahlen seitlich in horizontaler Richtung verschwenkt, wenn sich der Tisch nach vorwärts bewegt, wodurch eine rasterförmige Abtastung 52, 54 der Laserstrahlen sowohl über den Projektions- als auch den Belichtungstisch erfolgt.

Zur Erzeugung des Laserlesestrahls 36 ist bevorzugt ein Helium-Neon-Laser 58 vorgesehen, der beispielsweise einen Ausgangsstrahl der Wellenlänge von $6\,328 \cdot 10^{-8}$ cm ($6\,328$ Ångström) im roten Bereich des sichtbaren Spektrums liefert. Der Strahl durchläuft einen Strahlaufweiter und Kollimator 60 sowie einen Umlenkspiegel 62 entlang einem vorgegebenen Strahlengang 66 und nach dem Durchgang durch einen dichromatischen Strahlvereiniger 67, der eine Oberfläche besitzt, die selektiv für die Wellenlänge von $6\,328 \cdot 10^{-8}$ cm durchlässig ist, wird ein kollimierter Strahl 64 erhalten.

Ein charakteristisches System zur Erzeugung des Belichtungs- oder Laserschreibstrahls 34, der aktinisch auf die fotoempfindliche Oberfläche der zu belichtenden Platte auf dem Tisch 22 abgestimmt sein muß, verwendet einen Argonionenlaser 68 mit einem Ausgangsstrahl der Wellenlänge von beispielsweise $4\,880 \cdot 10^{-8}$ cm ($4\,880$ Ångström) im blauen Bereich des sichtbaren Spektrums und einer Ausgangsleistung von ungefähr 10 Milliwatt. Dieser Ausgangsstrahl durchläuft einen bekannten akusto-optischen Modulator 74, der die Stärke des durchgelassenen Strahls steuert. Der Belichtungsstrahl 34 wird über einen Umlenkspiegel 76 durch einen Strahlaufweiter und Kollimator 78 dem dichromatischen Strahlvereiniger 67 zugeleitet, aus dem der zuvor erwähnte kollimierte Strahl 64 austritt. Der Strahlvereiniger 67 reflektiert an seiner Vorderseite den kollimierten Laserbelichtungsstrahl von $4\,880 \cdot 10^{-8}$ cm, um die beiden Laserstrahlen 34 und 36 entlang des gemeinsamen Strahlengangs 66 zu vereinigen. Der Strahlengang ist längs einer vorgegebenen Richtung festgelegt und wird im Raum präzise eingehalten, um einen Umlenkspiegel 80 zu schneiden, der von dem Abtasttisch getragen wird, um die vereinigten Laserstrahlen in die Abtastvorrichtung zu lenken. Wie aus Fig. 1 ersichtlich ist, dient die Abtastvorrichtung 50 dazu, jeden Strahl in der Horizontalrichtung um einen bestimmten Winkelbetrag abzulenken. Nach dem Durchgang durch die Linsenoptik 82 durchlaufen die Laserstrahlen einen dichromatischen Strahlenteiler 84, der ähnlich dem Strahlenvereiniger 67 ausgebildet ist und den roten Strahl 36 durchläßt, der auf einen Umlenkspiegel 90 auftrifft, welcher ihn durch eine Durchgangsöffnung 92 im Tisch ablenkt, um auf die Vorlage auf dem Projektionstisch 26 aufzutreffen und diese abzutasten. Der Belichtungs- und der Projektionstisch sind in der optischen Brennebene der Flachfeldlinse 82 angeordnet, so daß diese Linse dazu dient, die Strahlen 34, 36 auf die entsprechenden Tische zu fokussieren.

Eine optische Leseeinheit 94 ist auf dem Abtasttisch befestigt. Da die Strahlen gleichzeitig jeden Tisch abtasten, wird der auf die Vorlage auf dem Projektionstisch 26 auftreffende Strahl 36 in ein Faseroptikbündel 96 reflektiert, dessen Fasern langgestreckt in einer linearen Anordnung über die Gesamtbreite der abzutastenden Vorlage hinweg angeordnet sind. Der Ausgang der Faseroptik-Leseeinheit wird einer Fotovervielfacherröhre 12 zugeleitet und in ein elektrisches Signal umgewandelt, das über eine Leitung 14 dem Modulator 74 zugeführt wird, der die Intensität des den Modulator 74 durchsetzenden Laserstrahls und damit die Hell-Dunkel-Signale des Laserstrahls 34 in Übereinstimmung mit den abgetasteten Informationen der auf dem Projektionstisch 26 liegenden Vorlage steuert.

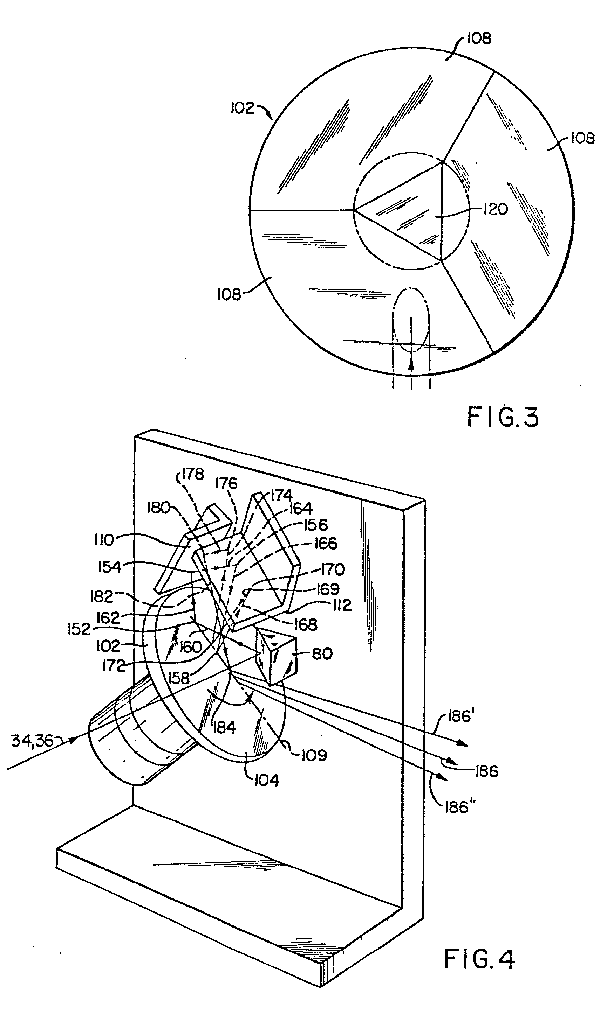

Die optische Abtastvorrichtung 50 der Erfindung wird unter Bezugnahme auf die Figuren 2 und 3 im folgenden näher erläutert. Die Abtastvorrichtung umfaßt im wesentlichen eine Dachspiegelanordnung 100, die optisch mit einer als Eingangs- und Ausgangselement dienenden Abtastscheibe 102 gekoppelt ist, die eine ebene Spiegelfläche 104 aufweist, welche sich fortschreitend durch den Strahlengang 66 bewegt und dadurch bewirkt, daß die Laserstrahlen, wie noch näher beschrieben werden wird, umgelenkt werden. Der eingangsseitige Umlenkspiegel 80 ist so angeordnet, daß er den Strahlengang 66 von dem Lasertisch auffängt und die Strahlen nach oben auf die ebene Oberfläche der Abtastscheibe 102 in eine geeignete Richtung ablenkt. Die Strahlen werden von der ebenen Spiegelfläche 104 der Abtastscheibe 102 gegen einen ersten Spiegel 110 der Dachspiegelanordnung 100 reflektiert, von diesem auf einen zweiten Spiegel 112 der Anordnung und dann zurückreflektiert auf die ebene Spiegelfläche 104, von der sie zuerst reflektiert wurden. Nach der zweiten Reflexion auf der ebenen Spiegelfläche 104 werden die Laserstrahlen nochmals gegen den zweiten Spiegel 112 und zurück auf die ebene Spiegelfläche 104 reflektiert. Für diese zuletzt erwähnte Reflexion können der Spiegel 110 oder mehrere zusätzliche Spiegel anstelle des Spiegels 112 verwendet werden. Die Strahlen werden dann wieder von der ebenen Spiegelfläche 104 auf den Spiegel 112 gelenkt. Von diesem Spiegel werden die Laserstrahlen zu dem Spiegel 110 reflektiert, von dem sie auf die ebene Spiegelfläche 104 gelenkt werden. Nach der vierten Reflexion an der ebenen Spiegelfläche 104 treten die Laserstrahlen aus der Abtastvorrichtung 50 in Richtung der Objektivlinse 82 und des dichromatischen Strahlaufteilers 84 aus.

Die ebene Spiegelfläche 104 weicht geringfügig von der Senkrechten zur Drehachse ab und der Winkel zwischen der ebenen Spiegelfläche 104 und der Ebene der Abtastscheibe 102 senkrecht zur Drehachse beträgt bis zu 6°. Im allgemeinen liegt dieser Winkel im Bereich zwischen 1° bis 6°. Die Anordnung wird im allgemeinen so getroffen, daß eine halbe Drehung der Abtastscheibe 102 die einfallenden Laserstrahlen 34, 36 in der Horizontalebene um einen Winkel ablenkt, der gleich dem 16-fachen Wert des Neigungswinkels zwischen der ebenen Spiegelfläche 104 der Abtastscheibe 102 und der Ebene der Abtastscheibe 102 senkrecht zu der Drehachse ist. Die Reflexionswinkel der ebenen Spiegelfläche 104 und der Dachspiegel 110, 112 und des Umlenkspiegels 80 legen die Richtung der Laserstrahlen fest, so daß durch geeignetes Positionieren der jeweiligen Lage dieser Optiken die Strahlen so eingestellt werden können, daß sie in Richtung des Strahlaufteilers 84 frei austreten können.

Zum Befestigen und Ausrichten der Dachspiegel 110 und 112 in gegenseitigem Abstand zueinander sind ein Rahmen 116 und ein Untergestell 114 vorgesehen. Der Spiegel 112 ist in seiner Lage an dem Untergestell 114 befestigt, während der Dachspiegel 110 von einem Tragring gehalten ist, dessen Winkelausrichtung mit Hilfe einer Dreipunktaufhängung einstellbar ist, die aus Differentialschrauben besteht, die in einem nicht gezeigten Querträger eingeschraubt sind und eine genaue gegenseitige Ausrichtung der beiden Spiegel ermöglichen.

In einer bevorzugten Ausführungsform schließen die Spiegel 110 und 112 einen Winkel von ungefähr 70° ein, wie dies in Fig. 2 dargestellt ist. Dabei schließt der Spiegel 110 einen Winkel von ungefähr 28°, der Spiegel 112 einen Winkel von ungefähr 42° und die Abtastscheibe 102 einen Winkel von ungefähr 49° mit der Senkrechten in Fig. 2 ein. Diese Winkel legen eine feste Winkelbeziehung zwischen den gewünschten Ausgangslaserstrahlen in senkrechter Winkelausrichtung mit der Objektivlinse und der Winkelausrichtung der Eingangsstrahlen 34, 36 fest.

Ein Motor- und Wellengehäuse 144 stützt die Abtastscheibe in ihrer Lage so ab, daß die Drehachse der Abtastscheibe ausgerichtet ist und in einer Ebene liegt, die von der optischen Achse der ausgangsseitigen Objektivlinse und der Achse der Eingangslaserstrahlen bestimmt wird, die alle zusammen auch eine Ebene festlegen, in welcher die Senkrechten auf die Oberflächen der Dachspiegel 110 und 112 durch entsprechende Einstellung liegen.

Fig. 3 zeigt eine weitere Ausführungsform einer Abtastscheibe mit reflektierenden Oberflächensegmenten, die eine Pyramide bilden, in der Gestalt ähnlich derjenigen der DE-A-28 25 550, auf die hiermit Bezug genommen wird. Diese Abtastscheibe ist bevorzugt eine gleichmäßige dreiseitige Pyramide, deren Scheitelabschnitt bei 120 abgeflacht ist und weist eine Symmetrieachse und einen imaginären Scheitel auf, der auf der Drehachse liegt. Die Pyramide umfaßt somit eine Anzahl von zumindest drei reflektierenden ebenen Oberflächensegmenten 108, die identisch ausgestaltet sind und in bezug auf die Drehachse jeweils einen Winkel von 120° miteinander einschließen. Jedes dieser Segmente besitzt eine sehr genau gearbeitete ebene reflektierende Oberfläche. Es ist wichtig, daß jedes Segment mit hoher Genauigkeit optisch eben ist, da die Eingangs- und Ausgangsreflexionen von dem Segment im allgemeinen beim Umlauf der Scheibe nicht an der gleichen Stelle liegen. Jedes Segment legt im Raum eine Ebene fest, die unter einem vorgegebenen Winkel von 90° minus des halben Scheitelwinkels in bezug auf eine senkrechte Ebene zur Drehachse der Abtastscheibe geneigt ist. Da das Oberflächensegment den gemeinsamen Strahlengang der Laserstrahlen durchläuft, ergibt sich die gleiche Wirkung wie wenn eine Ebene den Strahlengang durchläuft und dabei ihren Neigungswinkel zu diesem Strahlengang ändert.

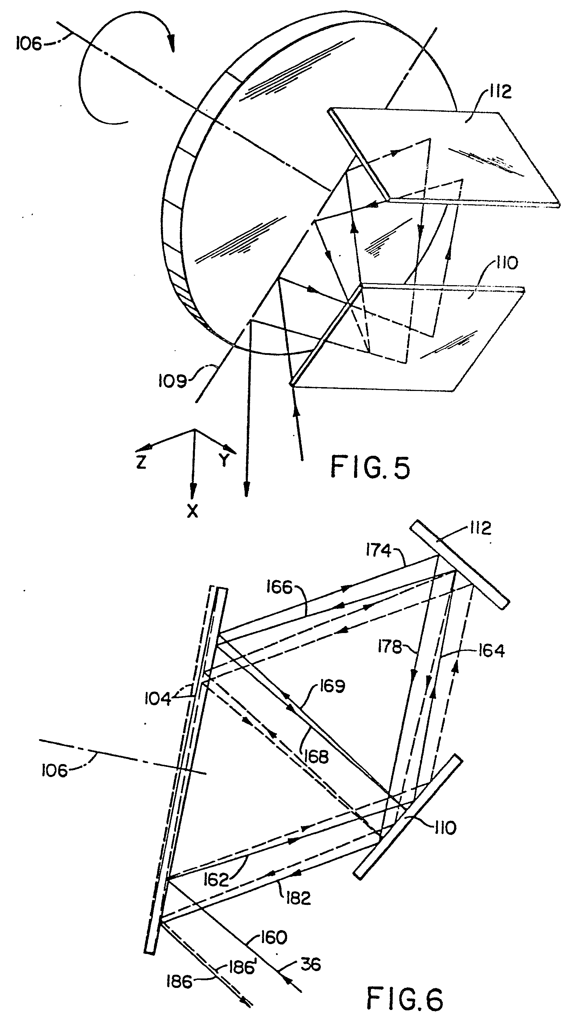

Fig. 4 zeigt schematisch den Strahlenverlauf der Laserstrahlen und ihre dreidimensionale Bewegung durch die Abtastvorrichtung während des Abtastens. Die Abtastvorrichtung umfaßt die Abtastscheibe 102 mit der ebenen Spiegelfläche 104, deren Senkrechte gegenüber der in Fig. 5 gezeigten Drehachse 106 um einen Winkel bis zu 6° geneigt ist. Die verschiedenen Strahlsegmente bzw. Teilstrahlen sind wie folgt gekennzeichnet : Der Teilstrahl 160 ist stationär, während der Teilstrahl 162 einer horizontalen und vertikalen Winkelabweichung bei der ersten Reflexion im Punkt 152 auf der ebenen Spiegelfläche 104 unterliegt. Die Teilstrahlen 164, 166 sind sowohl vertikal als auch horizontal infolge der Reflexionen in den Punkten 154, 156 der Spiegel 110, 112 der Dachspiegelanordnung versetzt. Der Teilstrahl 166 wird ein zweites Mal von der ebenen Spiegelfläche 104 im Punkt 158 reflektiert und als Teilstrahl 168 in Richtung des Spiegels 112 gelenkt. Im Punkt 170 des Spiegels 112 wird der Teilstrahl 169 auf die ebene Spiegelfläche 104 abgelenkt, wo er ein drittes Mal, im Punkt 172, reflektiert wird. Von hier aus trifft der Teilstrahl 174 den zweiten Spiegel 112 im Punkt 176 und wird als Teilstrahl 178 auf den ersten Spiegel 110 im Punkt 180 reflektiert und trifft als Teilstrahl 182 für eine vierte Reflexion im Punkt 184 auf die ebene Spiegelfläche 104 auf, um von dort aus die Abtastvorrichtung entlang des Laserstrahlengangs 186 zu verlassen.

Die Laserstrahlen 34, 36 werden 4n-fach an der ebenen Spiegelfläche 104 der Abtastscheibe 102 und 2n-fach zwischen den Dachspiegeln reflektiert, bevor sie die Abtastvorrichtung verlassen, wobei n gleich eine ganze Zahl ist. Beispielsweise kann n gleich der Anzahl der Reflexionen der Laserstrahlen auf jeder reflektierenden Oberfläche in der Abtastvorrichtung sein, wobei diese Laserstrahlen auf jede reflektierende Oberfläche nur einmal auftreffen. Mit anderen Worten, die vorliegende Erfindung verbessert die Abtastvorrichtung nach der DE-A-28 25 550, bei der jedes reflektierende Oberflächensegment der Abtastscheibe in den Strahlengang als Ergebnis der beiden Reflexionen an seiner Oberfläche insgesamt vier Abweichungen in die Laserstrahlen einführt. Es handelt sich hierbei um eine waagerechte Winkelablenkung, eine senkrechte Winkelablenkung, eine waagerechte Verlagerung und eine senkrechte oder Höhenverlagerung. Die Ablenkungen weisen eine unveränderliche konstante senkrechte Winkelkomponente auf, während die waagerechte Winkel- und waagerechte Verlangerungskomponente von Seite zu Seite in einem sich wiederholenden Muster fortschreiten. In der bekannten Abtastvorrichtung nach der DE-OS 28 25 550 erfahren die Laserstrahlen eine Ablenkung, bei der die senkrechte Verlagerungskomponente von oben nach unten in einem sich wiederholenden Muster fortschreitet, während bei der vorliegenden Erfindung diese Komponente unveränderlich ist. Die Strahlen bei der vorliegenden Erfindung füllen eine waagerechte, im wesentlichen flache Lichtebene aus, während die Strahlen der Abtastvorrichtung nach der DE-A-28 25 550 eine horizontale, gekrümmte Lichtfläche beschreiben, die durch eine anderes geeignetes Bauelement der optischen Einheit abgeflacht werden muß. Bei diesem Bauelement handelt es sich charakteristischerweise um eine im Strahlengang angeordnete Linse, deren Brennpunkt im augenscheinlichen Schwenkpunkt der waagerechten Winkelablenkung der Strahlen liegt.

Wie in der DE-A-28 25 550 beschrieben ist, tritt in einem Strahl, der eine Dachspiegelanordnung mit zwei unter 90° aufeinanderstehenden Spiegeln umfaßt, keine senkrechte Winkeländerung, d. h. keine Winkeländerung in senkrechter Richtung als eine Funktion einer Änderung des Neigungswinkels eines Reflektors auf, der einwandfrei eben ist und an dem der in die Dachspiegelanordnung einfallende, sowie der austretende Strahl reflektiert werden. Es ist eine bekannte Eigenschaft einer Dachspiegelanordnung, daß der eintretende Strahl eindeutig den Weg des austretenden Strahls festlegt und daß ein reflektierter Strahl unter genau dem gleichen Winkel wie bei seinem Eintritt in eine senkrecht zur Schnittlinie der Dachspiegelanordnung liegenden Ebene reflektiert wird. Aufgrund dieser Umkehrung an der Dachspiegelanordnung und wegen des Durchgangs durch die Dachspiegelanordnung wird die Winkelkomponente der Neigung des Reflektors für den einfallenden Strahl aufgehoben und es tritt nur eine Verlagerung auf.

Diese Ausführungen treffen genau auf die in Fig. 4 gezeigte Anordnung zu, in der die Laserstrahlen zweimal die Dachspiegelanordnung durchlaufen. Infolge des zweimaligen Hin- und Herlaufens der Laserstrahlen zwischen den Dachspiegeln werden die Laserstrahlen ohne eine nennenswerte periodische Vertikalversetzung aus der Dachspiegelanordnung reflektiert.

Die Strahlengänge 186' und 186" in Fig. 4 zeigen die waagerechte Winkelabweichung von dem gemeinsamen Strahlengang 186 der reflektierten Laserstrahlen.

Fig. 5 zeigt eine schematische Ansicht einer Abtastvorrichtung mit einer ebenen Spiegelfläche 104 der Abtastscheibe 102. Die Abtastscheibe hat beispielsweise folgende Kenndaten. Die ebene Spiegelfläche 104 ist zu der senkrechten Ebene auf die Drehachse 106, die parallel zur Richtung der y-Achse verläuft, geneigt. Die senkrechte Ebene zur Drehachse verläuft ihrerseits parallel zu der x-z-Ebene. Die einfallenden Laserstrahlen sind ungefähr 40° zur Achse geneigt.

Wenn sich die Abtastscheibe 102 um einen Winkel von 120° dreht, werden die gemeinsamen Laserstrahlen um 32° in der x-y-Ebene abgelenkt, jedoch in der x-y-Ebene erfolgt eine Versetzung nur um 0,14 % der Strecke zwischen der ersten und vierten Reflexion auf der ebenen Spiegelfläche 104. Dies ist eine erheblich geringere Versetzung als bei bekannten Abtastvorrichtungen, bei denen diese Versetzung in der x-y-Ebene bis zu 12 % der Strecke zwischen der ersten und der letzten Reflexion auf dem reflektierenden Segment der Abtastscheibe betragen kann. Aus Fig. 4 ist ersichtlich, daß die Reflexionspunkte auf der Spiegelfläche 104 auf einer Linie 109 liegen.

Ein Vorteil der Abtastscheibe 102 mit der ebenen Fläche 104 besteht in der extrem einfachen Herstellung eines derartigen ebenen Ablenkers. Bei der Ausführungsform der Abtastvorrichtung, die einen pyramidenförmigen, mehrfacettigen Ablenker verwendet, besteht der Vorteil, daß die Ablenkwinkelverstärkung im Vergleich zu bekannten Abtastvorrichtungen erhöht wird, da die Verstärkung proportional zu der Anzahl der Reflexionen der Laserstrahlen von der Abtastscheibe, d. h. dem pyramidenförmigen Ablenker, während einer Umdrehung des Ablenkers ist. Die erhöhte Winkelverstärkung gestattet die Verwendung einer weniger spitzen Pyramide, die weniger anfällig für eine Zerstörung durch Zentrifugalkräfte bei hohen Drehgeschwindigkeiten und darüber hinaus leichter herzustellen ist.

Fig. 6 zeigt eine schematische Ansicht des Strahlenganges durch die Abtastvorrichtung. Der Laserteilstrahl 160 schließt beispielsweise einen Winkel von 65° mit der ebenen Spiegelfläche 104 der nicht gezeigten Abtastscheibe ein. Die Spiegel 110, 112 der Dachspiegelanordnung sind so angeordnet, daß sie untereinander etwa einen Winkel von 90° einschließen. Der obere Spiegel 112 bildet einen 40°-Winkel mit der Horizontalebene, der untere Spiegel 110 einen 50°-Winkel mit der Horizontalebene, während die ebene Spiegelfläche 104 einen Neigungswinkel von 80° gegen die Horizontalebene aufweist und gegenüber der senkrechten Ebene zu der Drehachse 106 um 1° geneigt ist. Der Winkel zwischen den Teilstrahlen 168 und 169 beträgt ungefähr 2°.

In Fig. 6 ist auch durch eine gestrichelte Linie der Strahlengang für eine Änderung von 1° des Neigungswinkels der ebenen Spiegelfläche 104 dargestellt. Der Ablenkwinkel zwischen den austretenden Laserstrahlgängen 186 und 186' beträgt ungefähr 8° für die voranstehend angeführte Änderung von 1° im Neigungswinkel.

Die Vertikalversetzung zwischen den Strahlengängen 186 und 186' ist nahezu ausgelöscht und beträgt nur 0,030 6 der halben Weglänge, das sind 0,05 mm (2 mil) auf etwa 15 cm (6").

Von besonderem Vorteil ist bei der in den Fig. 2, 4, 5 und 6 gezeigten Ausführungsform, daß die Abtastscheibe aus einer kreisförmigen Scheibe ausgeschnitten werden kann, indem nur eine einzige ebene Spiegelfläche hergestellt wird. Es ist offensichtlich, daß eine exakt gearbeitete und genau zentrisch mit einer Rille als Drehlagerung verbundene Kreisscheibe weitgehend vibrationsfrei umläuft. Eine runde Formgebung ist verhältnismäßig einfach und ermöglicht bei den vorgesehenen Drehzahlen von 7 000 vibrationsfreien Umdrehungen pro min und mehr eine ausreichende mechanische Festigkeit und die Möglichkeit, bei derartigen Geschwindigkeiten die Abtastscheibe zu betätigen, ohne daß in den Teilen Materialbeanspruchungen auftreten, die über diejenigen hinausgehen, die zu erwarten sind. Eine sorgfältige Herstellung der Abtastscheibe und sämtlicher umlaufenden Teile läßt eine praktisch symmetrische Massenverteilung um die Drehachse mit hohem dynamischem Auswuchtgrad der umlaufenden Elemente erwarten.

Anstelle der angegebenen Drehzahlen von bis zu 7 000 Umdrehungen pro min ist die vorliegende Abtastvorrichtung aufgrund ihrer Konstruktion in der Lage, auch für Drehzahlen über 60 000 Umdrehungen pro min verwendet zu werden. Derartige Drehzahlen ergeben lineare Abtastabfragezeiten bis zu 3 000 Abtastungen pro sec, die bisher mit bekannten Abtastvorrichtungen nicht möglich waren. Entsprechend der Erfindung stellt somit das Abtastelement mit einer derartigen Abtastfragezeit nicht länger das die Arbeitsweise beschränkende Element bei der Herstellung von Druckplatten u. dgl. dar. Die Abtastvorrichtung besitzt viele für eine hochleistungsfähige Vorrichtung dieser Art erforderliche Eigenschaften. Senkrechtes Flattern (Wobbeln) oder Höhenversetzungen sind dabei ausgeschaltet. Während ein Abtastwirkungsgrad von zumindest 75 % leicht erhalten werden kann, kann der Abtastwirkungsgrad gesteigert werden, indem der Durchmesser der Abtastscheibe bis zu den noch vertretbaren Abmessungsgrenzen größer gemacht wird. Abtastzeiten für übliche Druckplattenabmessungen mit typischer Rasterabtastung und den hier beschriebenen Abtastgeschwindigkeiten liegen pro Bild bei 1 min.

Die Charakteristiken der Mehrfacetten-Abtastscheibe in der Abtastrichtung nach der Erfindung sind in der DE-OS 28 25 550 offenbart und es wird darauf Bezug genommen.

Mit dem vorliegenden System wird die Anwendung im multifrequenten Betrieb ins Auge gefaßt, bei welchem der Lese- und der Schreibstrahl verschiedene Frequenz besitzen und längs eines gemeinsamen einzigen Strahlenwegs überlagert sind. Das System ist ebenso geeignet für Faksimile-Betrieb, wie er beispielsweise in der DE-OS 27 26 563 und in der europäischen Patentanmeldung 78.100.088.0 beschrieben ist. Die Winkelstellung der Abtastscheibe kann entweder durch die Konstruktion der Kodierscheibe oder durch eine räumliche Wechselblende innerhalb des Faksimile-Systems bestimmt werden. Die Abtastvorrichtung wird in Flachfeld-Abtasteinrichtungen, wie eine davon in Fig. 1 gezeigt ist, eingesetzt.

Während die Erfindung insbesondere unter Bezugnahme auf bevorzugte Ausführungsformen dargestellt und beschrieben wurde, ist es selbstverständlich, daß verschiedene Änderungen in der Gestalt und in Einzelheiten vorgenommen werden können, ohne daß von dem Erfindungsgedanken abgewichen wird.

**Ansprüche**

1. Lese- und Schreibvorrichtung mit einer optischen Abtastvorrichtung (50), durch die der Lese- und Schreibstrahl kollinear hindurchgeführt sind und die eine Dachspiegelanordnung (100) und eine, um eine Drehachse (106) drehbare Abtastscheibe (102) mit zumindest einer darauf nicht senkrecht zu der Drehachse angeordneten, ebenen Spiegelfläche (104 ; 108) aufweist, wobei die Dachspiegelanordnung (100) aus einem ersten ebenen Spiegel (110) und einem zweiten ebenen Spiegel (112) besteht, die in Relation zueinander und zu einer die Abtastscheibe abstützenden und deren Drehachsenrichtung bestimmenden Einrichtung (144) fest stehen, dadurch gekennzeichnet, daß der kollinear geführte Lese- und Schreibstrahl (66) nach dem Eintritt in die und bis zu dem Austritt aus der Abtastvorrichtung (50) 4n-fach an der Spiegelfläche (104 ; 108) der Abtastscheibe (102) und 2n-fach direkt zwischen den beiden Spiegeln (110, 112) der Dachspiegelanordnung (100), mit n gleich einer ganzen Zahl, so reflektiert wird, daß die Reflexionen in der Reihenfolge Spiegelfläche (104), erster Spiegel (110), zweiter Spiegel (112), danach Spiegelfläche (104), zweiter Spiegel (112), Spiegelfläche (104) und vor dem Austritt in der Reihenfolge zweiter Spiegel (112), erster Spiegel (110), Spiegelfläche (104) erfolgen.

2. Vorrichtung nach Anspruch 1, dadurch gekennzeichnet, daß die Spiegelfläche (104) einen Neigungswinkel bis zu 6° mit der zu der Drehachse (106) senkrechten Ebene einschließt.

3. Vorrichtung nach Anspruch 1, dadurch gekennzeichnet, daß der erste Spiegel (110) einen Winkel bis zu 80° und der zweite Spiegel (112) einen Winkel von zumindest 10° mit der Spiegelfläche (104) einschließt.

4. Vorrichtung nach Anspruch 1 oder 2, dadurch gekennzeichnet, daß der Winkel zwischen dem ersten und zweiten Spiegel (110, 112) 50° bis 90° beträgt.

5. Vorrichtung nach Anspruch 1, dadurch gekennzeichnet, daß n gleich Eins oder Zwei ist.

6. Vorrichtung nach Anspruch 1, dadurch gekennzeichnet, daß eine Mehrzahl von reflektierenden Spiegelflächen (108) auf der Abtastscheibe (102) angeordnet ist.

7. Vorrichtung nach Anspruch 6, dadurch gekennzeichnet, daß die Spiegelflächen (108) Seitenflächen einer Pyramide sind und jede Spiegelfläche einen gleichgroßen Scheitelwinkel aufweist und daß die Höhe der Pyramide kleiner als der Durchmesser der Abtastscheibe (102) ist.

8. Vorrichtung nach Anspruch 7, dadurch gekennzeichnet, daß die Zahl der Spiegelflächen (108) drei beträgt.

9. Lese- und Schreibvorrichtung nach einem der vorhergehenden Ansprüche, bei der ein Strahl (36) eines Leselasers (58) eine Vorlage und gleichzeitig ein Strahl (34) eines Schreiblasers (68) ein lichtempfindliches Aufzeichnungsmedium abtasten, mit optischen Einrichtungen (60, 62, 74, 76, 67, 80) zum Ausrichten und Zusammenführen des Schreib- und Lesestrahls zu dem kollinear geführten Lese- und Schreibstrahl (66), der die Abtastvorrichtung (50) durchläuft, die ihm eine sich wiederholende Horizontalabweichung erteilt, dadurch gekennzeichnet, daß ein Strahlteiler (84) den kollinear geführten Strahl (66) empfängt, in den Lesestrahl (36) und in den Schreibstrahl (34) aufteilt und den Lesestrahl auf eine erste Abtaststation (24) und den Schreibstrahl auf eine zweite Abtaststation (20) richtet, daß die erste Abtaststation die vom Lesestrahl abzutastende Vorlage und eine Fühlereinrichtung (96) zum Erfassen des von der Vorlage reflektierten Lesestrahls enthält, daß die zweite Abtaststation ein für Laserstrahlung empfindliches Aufzeichnungsmaterial enthält, daß ein Strahlenmodulator (74) für die Modulation der Intensität des Schreibstrahls (34) in dessen Strahlengang angeordnet und mit der Fühlereinrichtung (96) verbunden ist und daß Einrichtungen vorgesehen sind, die zum Erzielen einer rasterförmigen Abtastung den Lese- und den Schreibstrahl gleichzeitig auf der ersten und zweiten Abtaststation (20, 24) senkrecht zu der Abtastlinie (52, 54) bewegen.

10. Lese- und Schreibvorrichtung nach Anspruch 9, dadurch gekennzeichnet, daß die Spiegelfläche (108) auf der Abtastscheibe (102) einen Neigungswinkel im Bereich von 1° bis 6° mit einer Ebene senkrecht zur Drehachse (106) einschließt.

11. Lese- und Schreibvorrichtung nach Anspruch 10, dadurch gekennzeichnet, daß der erste Spiegel (110) einen Winkel von ungefähr 80° und der zweite Spiegel (112) einen Winkel von etwa 10° mit der Spiegelfläche (108) einschließt und daß eine halbe Drehung der Abtastscheibe (102) bzw. der darauf befestigten Spiegelfläche (108) die Laserstrahlen (34, 36) in der Horizontalebene um einen Winkel ablenkt, der gleich dem 16-fachen des Neigungswinkels zwischen der Spiegelfläche (108) und der Senkrechten zur Drehachse (106) ist.

12. Lese- und Schreibvorrichtung nach Anspruch 9, dadurch gekennzeichnet, daß jede der Spiegelflächen die Gestalt eines Kreisausschnittes mit abgeschnittener Spitze besitzt.

13. Lese- und Schreibvorrichtung nach Anspruch 9 oder 10, dadurch gekennzeichnet, daß die erste und die zweite Abtaststation (20, 24) im Brennpunkt einer Linse (82) liegen, die im Strahlengang zwischen der Abtastvorrichtung (50) und dem Strahlteiler (84) liegt.

## Claims

1. Read/write apparatus comprising an optical scanner device (50), through which the read/write beam is collinearly passed and which is provided with a roof mirror assembly (100) and a scanner wheel (102), rotatable about an axis of rotation (106) and having at least one planar mirror surface (104 ; 108) arranged thereon, which is off normality to the axis of rotation, said roof mirror assembly (100) comprising a first planar mirror (110) and a second planar mirror (112) which are fixed in spaced relation to each other and to an arrangement (144), which supports the scanner wheel and determines the direction of the axis of rotation, characterised in that the collinearly guided read/write beam (66) is reflected, after entering into and before emerging from the scanner device (50), 4n times by the mirror surface (104 ; 108) of the scanner wheel (102) and 2n times between the two mirrors (110, 112) of the roof mirror assembly (100), where n is an integer, in a manner such that the reflections take place in the order mirror surface (104), first mirror (110), second mirror (112), thereafter mirror surface (104), second mirror (112), mirror surface (104) and before emergence in the order second mirror (112), first mirror (110), mirror surface (104).

2. Apparatus as claimed in claim 1, characterised in that the mirror surface (104) defines an angle of tilt of up to 6° with the plane perpendicular to said axis of rotation (106).

3. Apparatus as claimed in claim 1, characterised in that the first mirror (110) defines an angle of up to 80° and the second mirror (112) defines an angle of at least 10° with the mirror surface (104).

4. Apparatus as claimed in claim 1 or 2, characterised in that the angle between the first and second mirrors (110, 112) is from about 50° to 90°.

5. Apparatus as claimed in claim 1, characterised in that n equals 1 or 2.

6. Apparatus as claimed in claim 1, characterised in that a plurality of reflective mirror surfaces (108) are positioned on the scanner wheel (102).

7. Apparatus as claimed in claim 6, characterised in that the mirror surfaces (108) are lateral surfaces of a pyramid and each mirror surface has an equal apex angle and that the height of said pyramid is less than the diameter of the scanner wheel (102).

8. Apparatus as claimed in claim 7, characterised in that the number of mirror surfaces (108) is 3.

9. Read/write apparatus as claimed in any one of the foregoing claims, in which a beam (36) of a read laser (58) scans an original copy and a beam (34) of a write laser (68) simultaneously scans a light-sensitive recording medium, comprising optical means (60, 62, 74, 76, 67, 80) for aligning and combining the write and read beams to form the collinearly guided read/write beam (66) which passes the scanner device (50) imparting a repeating horizontal deviation to said read/write beam, characterised in that a beam splitter (84) receives the collinearly guided beam (66), separates it into the read beam (36) and the write beam (34) and directs the read beam toward a first scan station (24) and the write beam toward a second scan station (20), that the first scan station contains the original copy to be scanned by the read beam and a sensing means (96) for detecting the read beam reflected from the original copy, that the second scan station contains a recording material which is sensitive to laser radiation, that a beam modulator (74) for the modulation of the intensity of the write beam (34) is located in the beam path of the write beam and is connected with said sensing means (96), and that means are provided, which cause the read and write laser beams to simultaneously sweep the first and second scan stations (20, 24) perpendicular to the scan line (52, 54), in order to obtain a grating scan.

10. Read/write apparatus as claimed in claim 9, characterised in that the mirror surface (108) on the scanner wheel (102) defines an angle of tilt in the range from 1° to 6° with a plane perpendicular to the axis of rotation (106).

11. Read/write apparatus as claimed in claim 10, characterised in that the first mirror (110) defines an angle of about 80° and the second mirror (112) defines an angle of about 10° with the mirror surface (108) and that a half-revolution of the scanner wheel (102) and of the mirror surface (108) fixed on the scanner wheel, respectively, sweeps the laser beams (34, 36) in the horizontal plane through an angle which is equal to 16 times the angle of tilt between the mirror surface (108) and the perpendicular to the axis of rotation (106).

12. Read/write apparatus as claimed in claim 9, characterised in that each of the mirror surfaces has the shape of a sector of circle with a cut-off tip.

13. Read/write apparatus as claimed in claim 9 or 10, characterised in that the first and second scan stations (20, 24) are located at the focal point of a lens (82) positioned in the beam path between the scanner device (50) and the beam splitter means (84).

## Revendications

1. Appareil de lecture/écriture comprenant un dispositif analyseur optique (50) par lequel passe le faisceau de lecture/écriture, de façon colinéaire, et qui comporte un miroir dièdre (100) et un disque analyseur (102) pouvant tourner autour d'un axe de rotation (106) et comprenant au moins une surface réfléchissante plane (104 ; 108) disposée sur lui qui n'est pas perpendiculaire à l'axe de rotation, ledit miroir dièdre (100) comprenant un premier miroir plan (110) et un second miroir plan (112) qui sont en relation fixe l'un par rapport à l'autre et par rapport à un dispositif (144) qui supporte le disque analyseur et qui détermine la direction de l'axe de rotation, caractérisé en ce que le faisceau de lecture/écriture (66) guidé de façon colinéaire est réfléchi, après être entré dans le dispositif analyseur (50) et jusqu'à en être sorti, 4n fois par la surface réfléchissante (104 ; 108) du disque analyseur (102) et 2n fois entre les deux miroirs (110, 112) du miroir dièdre (100) où n est un nombre entier, de manière que les réflexions se fassent dans l'ordre de la surface réfléchissante (104), du premier miroir (110), du second miroir (112), puis de la surface réfléchissante (104), du second miroir (112), de la surface réfléchissante (104) et avant d'émerger dans l'ordre, par le second miroir (112), le premier miroir (110), la surface réfléchissante (104).

2. Appareil selon la revendication 1, caractérisé en ce que la surface réfléchissante (104) définit un angle d'inclinaison allant jusqu'à 6° avec le plan perpendiculaire audit axe de rotation (106).

3. Appareil selon la revendication 1, caractérisé en ce que le premier miroir (110) définit un angle allant jusqu'à 80° et le second miroir (112) définit un angle d'au moins 10° avec la surface réfléchissante (104).

4. Appareil selon la revendication 1 ou 2, caractérisé en ce que l'angle entre le premier et le second miroirs (110, 112) est d'environ 50° à 90°.

5. Appareil selon la revendication 1, caractérisé en ce que n est égal à 1 ou 2.

6. Appareil selon la revendication 1, caractérisé en ce que plusieurs surfaces réfléchissantes (108) sont positionnées sur le disque analyseur (102).

7. Appareil selon la revendication 6, caractérisé en ce que les surfaces réfléchissantes (108) sont des surfaces latérales d'une pyramide et chaque surface réfléchissante fait un angle au sommet égal, la hauteur de ladite pyramide étant inférieure au diamètre du disque analyseur (102).

8. Appareil selon la revendication 7, caractérisé en ce que le nombre des surfaces réfléchissantes (108) est 3.

9. Appareil de lecture/écriture selon l'une quelconque des revendications précédentes, dans lequel un faisceau (36) d'un laser de lecture (58) balaye un document original et un faisceau (34) d'un laser d'écriture (68) balaye simultanément un support d'enregistrement photosensible, comprenant un dispositif optique (60, 62, 74, 76, 67, 80) pour aligner et combiner les faisceaux d'écriture et de lecture afin de former un faisceau de lecture/écriture (66) guidé de façon colinéaire qui passe par le dispositif analyseur (50) imprimant une déviation horizontale répétitive audit faisceau de lecture/écriture, caractérisé en ce qu'un séparateur de faisceau (84) reçoit le faisceau (66) guidé de façon colinéaire, le sépare en un faisceau de lecture (36) et en un faisceau d'écriture (34) et dirige le faisceau de lecture vers un premier poste d'analyse (24) et le faisceau d'écriture vers un second poste d'analyse (20), en ce que le premier poste d'analyse comporte le document original à analyser par le faisceau de lecture et un dispositif de détection (96) destiné à détecter le faisceau de lecture réfléchi par le document original, en ce que le second poste d'analyse contient une matière d'enregistrement qui est sensible au rayonnement laser, qu'un modulateur de faisceau (74) pour la modulation de l'intensité du faisceau d'écriture (34) est disposé dans le trajet du faisceau d'écriture et est connecté audit dispositif de détection (96) et en ce qu'un dispositif est prévu qui entraîne que les faisceaux de laser de lecture et d'écriture balayent simultanément le premier et le second postes d'analyse (20, 24) perpendiculairement à la ligne de balayage (52, 54) afin d'obtenir un balayage en trame.

10. Appareil de lecture/écriture selon la revendication 9, caractérisé en ce que la surface réfléchissante (108) sur le disque analyseur (102) définit un angle d'inclinaison dans la plage de 1° à 6° avec un plan perpendiculaire à l'axe de rotation (106).

11. Appareil de lecture/écriture selon la revendication 10, caractérisé en ce que le premier miroir (110) définit un angle d'environ 80° et le second miroir (112) définit un angle d'environ 10° avec la surface réfléchissante (108) et en ce qu'un demi-tour de disque analyseur (102) et de la surface réfléchissante (108) fixée sur le disque analyseur respectivement balaye les faisceaux de laser (34, 36) dans le plan horizontal d'un angle qui est égal à 16 fois l'angle d'inclinaison entre la surface réfléchissante (108) et la perpendiculaire à l'axe de rotation (106).

12. Appareil de lecture/écriture selon la revendication 9, caractérisé en ce que chacune des faces réfléchissantes a la forme d'un secteur de cercle avec la pointe coupée.

13. Appareil de lecture/écriture selon la revendication 9 ou 10, caractérisé en ce que le premier et le second postes d'analyse (20, 24) sont situés au foyer d'une lentille (82) positionnée dans le trajet du faisceau entre le dispositif analyseur (50) et le séparateur de faisceau (84).

FIG.1

FIG.2

FIG.3

FIG.4

3

FIG. 5

FIG.6

4